# EUROPÄISCHE PATENTSCHRIFT

(11) **EP 2 712 803 B1**
(45) Veröffentlichungstag und Bekanntmachung des Hinweises auf die Patenterteilung: **18.05.2016**
(21) Anmeldenummer: 13186492.8
(22) Anmeldetag: 27.09.2013
(51) Int. Cl.: B64C 3/28, B64C 3/26

(54) **Flügelkörper**
Wing body
Corps d'aile

(30) Priorität: 28.09.2012 DE 102012109233
(43) Veröffentlichungstag der Anmeldung: 02.04.2014
(73) Patentinhaber: Deutsches Zentrum für Luft- und Raumfahrt e.V., 51147 Köln (DE); Airbus Operations Limited, Bristol BS34 7PA (GB)
(72) Erfinder: Bold, Jens, 38106 Braunschweig (DE); Ückert, Christian, 21682 Stade (DE); Steffen, Olaf, 21073 Hamburg (DE); Hühne, Dr. Christian, 30174 Hannover (DE); Holmes, Vernon, Filton, Bristol BS34 7PA (GB)
(74) Vertreter: Aisch, Sebastian

(56) Entgegenhaltungen:
- US-A- 4 565 595
- US-A1- 2010 065 687

## Beschreibung

Die Erfindung betrifft einen Flügelkörper für ein Flugobjekt mit einem Flügelkasten, der aus zwei diametral gegenüberliegenden Flügelschalen gebildet ist und einer in Strömungsrichtung von dem Flügelkasten angeordneten Flügelvorderkante, welche die äußere Strömungsoberfläche der Flügelschale mit der äußeren Strömungsoberfläche der Flügelvorderkante zu einem Strömungsprofil verbindet.

Im Sinne der vorliegenden Erfindung werden unter dem Begriff "Flügelkörper" diejenigen Elemente eines Flugobjektes verstanden, die von dem Rumpf des Flugobjektes abstehend angeordnet sind und bei bestimmungsgemäßen Gebrauch des Flugobjektes durch Luftschichten angeströmt werden, wodurch spezielle Effekte erzielt werden sollen. So sind die Tragflügel (Tragflächen) sowie die Leitwerke (Höhenleitwerk, Seitenleitwerk) insbesondere Flügelkörper im Sinne der vorliegenden Erfindung.

Die Profilflächen der Flügelkörper von Flugobjekten, wie beispielsweise Tragflächen von Verkehrsflugzeugen, besitzen zunächst grundsätzlich laminare Grenzschichten, die bei heutigen Verkehrsflugzeugen jedoch frühzeitig in turbulente Grenzschichten umschlagen. Eine solche turbulente Grenzschicht weist dabei einen deutlich erhöhten Reibungswiderstand auf als eine laminare Grenzschicht. Die Instabilität der Grenzschicht, die zu dem Umschlag führt, wird durch Formabweichungen, wie sie Lücken und Stufen in der Kontur der Profilfläche darstellen, begünstigt.

Zulässige Werte für diese Formabweichungen sind beispielsweise 0,5 mm für Stufen entgegen der Strömungsrichtung sowie 0,1 mm für Stufen in Richtung der Strömung.

Werden derlei Formabweichungen insbesondere im Vorderbereich der aerodynamischen Funktionsfläche vermieden, führt dies zu einem späteren Umschlag der Strömung von einer laminaren Grenzschicht in eine turbulente Grenzschicht und somit zu einem erweiterten Bereich der laminaren Profilumströmung (NLF, Natural Laminar Flow). Dies wiederum führt zu einer Widerstandreduzierung und direkter Treibstoffeinsparung bzw. aus der Breguet'schen Reichweitenformel abgeleiteten gesteigerten Reichweite des Verkehrsflugzeuges.

Heutige Verkehrsflugzeuge benötigen zur Erzeugung des zur Kompensation der Massenkraft erforderlichen Auftriebs in der Start- und Landephase spezielle Einrichtungen an den Tragflügeln, die als Hochauftriebssysteme bezeichnet werden. Betrachtet man die Luftströmung vor allem im Hinblick auf die Laminarität der Grenzschicht, sind die Hochauftriebssysteme am Vorflügel von übergeordneter Bedeutung. Hierbei werden im Stand der Technik zwei verschiedene Ausführungsformen unterschieden: a) die ausfahrbaren Vorflügel (Slats) und b) die Krueger-Klappen (Krueger-Flaps).

Die ausfahrbaren Vorflügel (Slats) sind dabei die Spitze des Flügels und werden auf Schienen geführt nach vorne ausgefahren. Im eingezogenen Zustand hinterlassen sie dabei eine Lücke bzw. einen Absatz auf der Oberseite der aerodynamischen Oberfläche des Flügels, so dass ab diesem Bereich eine laminare Grenzschicht nicht mehr möglich ist. im Gegensatz dazu stören die Krueger-Flaps die aerodynamische Oberfläche auf der Flügeloberseite nicht, da sie aus der Unterseite des Vorflügels ausgeklappt werden.

Grundsätzlich bestehen derlei Flügelkörper, insbesondere die Tragflügel von Verkehrsflugzeugen, aus einem Flügelkasten, der zwei diametral gegenüberliegende Flügelschalen hat, die mit Hilfe von Holmen und Rippen im Inneren des Flügelkastens gehalten werden, die dabei auch der Einhaltung der geforderten Profilkontur des Flügels dienen. Häufig bildet der Flügelkasten dabei auch einen integralen Treibstofftank. In Strömungsrichtung vor dem Flügelkasten wird nun die Flügelvorderkante befestigt, welche die äußere Strömungsoberfläche des Flügelkastens mit der äußeren Strömungsoberfläche der Flügelvorderkante zu einem Strömungsprofil verbindet und darüber hinaus die bei einigen Flugzeugen vorgesehenen Hochauftriebssysteme am Vorflügel enthält (Slats oder Krueger-Flaps).

Bei einem konventionellen Verkehrsflugzeug wird der Flügel bzw. Flügelkörper in der Regel aus einem Aluminiummaterial gefertigt, wobei die Struktur der Flügelvorderkante mit der Struktur des Flügelkastens vernietet wird. Eine solche Nietverbindung zeichnet sich dabei dadurch aus, dass ein entsprechender Bolzen bzw. ein Befestigungsmittel durch die Oberfläche der jeweiligen Struktur geführt wird, wobei an den äußeren Kanten dann ein entsprechender Abschluss vorgesehen ist. Die Vorderflügelkante und eine der Flügelschalen werden hierfür überlappend angeordnet und dann mit mehreren Nietverbindungen verbunden, wobei eine solche Nietverbindung eine zusätzliche Störung auf der Strömungsoberfläche darstellt und somit die Grenzschicht negativ beeinflusst. So wird durch den Nietkopf an der Strömungsoberfläche der Umschlag von einer laminaren in eine turbulente Grenzschicht begünstigt, so dass Seite 4 lich eine derartige Nietverbindung im Vorflügelbereich vermieden werden sollte.

Zwar gibt es Bestrebungen, den Flügelkörper integral auszubilden, d.h., dass die Vorderkante und der Flügelkasten aus einem einzigen Bauteil gebildet werden. Dies hätte zwar den Vorteil, dass die Strömungsoberfläche frei von Störungen wäre, was sich günstig auf die Laminarströmung auswirkt. Allerdings ist die Flügelvorderkante eines Verkehrsflugzeuges gegenüber Beschädigungen besonders exponiert, so dass es regelmäßig zu sogenannten Vogelschlägen d.h. Zusammenstößen mit Vögeln kommt, die zu Beschädigungen der Struktur der Flügelvorderkante führen. In einer integralen Bauweise wäre nun die Vorderkante nicht mehr austauschbar, so dass die beschädigte Struktur entweder repariert werden müsste oder der komplette Flügel ausgetauscht werden müsste. Aufgrund der Tatsache, dass ein Flügel jedoch wichtige Elemente, wie beispielsweise den Treibstofftank, enthält, ist der vollständige Austausch eines Flügels nur aufgrund einer Beschädigung an der Vorderkante nicht zu rechtfertigen.

Aus diesem Grund ist trotz der beschriebenen Problematiken bei der differentiellen Bauweise eines Flügelkörpers und trotz der auf der Hand liegenden Vorteile die differentielle Bauweise allein aus ökonomischen Aspekten vorzuziehen, da nur so ein Austausch und eine Reparatur mit adäquaten Aufwand möglich ist.

Darüber hinaus gibt es seit einiger Zeit große Bestrebungen, das Gesamtgewicht eines Flugzeuges zu reduzieren, was zu einer direkten Treibstoffeinsparung führen würde. Allerdings weisen insbesondere Verkehrsflugzeuge eine Vielzahl von tragenden Strukturen auf, die nicht ohne Weiteres einer Leichtbauweise zugänglich sind, da hier Beschädigungen oder Instabilitäten schnell zu einer großen Katastrophe führen können.

Aus der US 2010/0065687 A1 ist eine Flügelstruktur bekannt, bei der die Flügelvorderkante an den Rippen des Flügelkastens befestigt wird. Dabei sind Befestigungselemente vorgesehen, welche im Inneren des Flügelkastens angeordnet sind, wobei zapfenförmige Befestigungsmittel durch die Strömungsoberfläche der Flügelvorderkante geführt werden, um die Flügelvorderkante an den Befestigungselementen zu fixieren.

Aus der US 6,863,117 ist ein geschwungener Flügel bekannt, bei derr Seite 4a gelvorderkante aus einer Mehrzahl von einzelnen, separaten Teilen besteht, die separat an- und abgebaut werden können.

Vor diesem Hintergrund ist es Aufgabe der vorliegenden Erfindung einen Flügelkörper für ein Flugobjekt anzugeben, der gegenüber herkömmlichen Flügelkörpern ein geringeres Gewicht aufweist und zudem eine laminare Grenzschicht begünstigt.

Die Aufgabe wird mit dem Flügelkörper nach Anspruch 1 gelöst.

Erfindungsgemäß wird somit ein Flügelkörper vorgeschlagen, der einen Flügelkasten und ein in Strömungsrichtung vor dem Flügelkasten angeordnete Flügelvorderkante aufweist. Der Flügelkasten ist dabei aus zwei diametral gegenüberliegenden Flügelschalen gebildet, wobei die Flügelvorderkante die äußere Strömungsoberfläche der Flügelschale mit der äußeren Strömungsoberfläche der Flügelvorderkante zu einem Strömungsprofil verbindet. Dabei weist erfindungsgemäß zumindest einer der Flügelschalen ein Material auf, das aus einem Faserverbundwerkstoff besteht. Ein solcher Faserverbundwerkstoff kann beispielsweise CFK sein. Die Flügelschale kann beispielsweise aus den im Stand der Technik bekannten Herstellungsverfahren für Faserverbundwerkstoffe, wie beispielsweise aus vorimprägnierten Faserhalbzeugen (Prepregs), hergestellt sein.

Aufgrund der Tatsache, dass zumindest eine der Flügelschalen, vorzugsweise beide Flügelschalen sowie besonders vorzugsweise auch die Flügelvorderkante, aus einem Faserverbundwerkstoff hergestellt sind, kann das Gewicht der tragenden Flügelstruktur gegenüber herkömmlichen Materialien deutlich gesenkt werden, ohne die notwendigen Sicherheitsaspekte zu vernachlässigen. Eine solche Flügelschale kann dabei so hergestellt werden, dass auf der Innenseite eine Vielzahl von sogenannten Stringern (Verstärkungselementen) angeordnet ist, die zu der notwendigen Steifigkeit in Richtung außerhalb der Faserlage führen.

Durch die Gewichtsreduzierung kann dabei erheblich an Treibstoff eingespart werden, was eine Vielzahl von ökologischen und ökonomischen Vorteilen hat.

Um einen möglichst großen Bereich an dem Flügelkörper zu erzeugen, in dem die Laminarströmung so lang wie möglich aufrecht erhalten bleiben kann, was zu weiteren Treibstoffeinsparungen im Betrieb führt, wird des Weiteren erfindungsgemäß vorgeschlagen, dass die Flügelschale und die Flügelvorderkante nicht wie aus dem Stand der Technik bekannt mit Hilfe von Nieten verbunden werden, sondern über innen liegende Verbindungselemente, die jeweils an Befestigungselementen der Flügelschale und der Flügelvorderkante angeordnet werden. Hierfür weisen die Flügelvorderkante und die Flügelschalen in den Innenraum des Flügelkörpers ragende Befestigungselemente auf, an denen die Verbindungselemente, vorzugsweise in Längsrichtung der Strömungsrichtung, befestigt werden. Dabei wird ein Verbindungselement zumindest an einem Befestigungselement der Flügelschale und an zumindest einem Befestigungselement der Flügelvorderkante angeordnet, so dass Flügelschale und Flügelvorderkante miteinander zur Bildung eines Strömungsprofils verbunden werden.

Die Befestigungselemente der Flügelschale und/oder Flügelvorderkante können beispielsweise Verstärkungselemente, wie beispielsweise Stringer, sein, die zusätzlich so ausgeformt sind, dass sie die Verbindungselemente mit Hilfe von Befestigungsmitteln, wie beispielsweise Nieten oder Schrauben, aufnehmen können.

Der Flügelkörper ist somit des Weiteren dadurch gekennzeichnet, dass zur Verbindung der Flügelschale und der Flügelvorderkante kein Befestigungsmittel durch die Strömungsoberfläche der Flügelvorderkante und/oder Flügelschale geführt ist. Aufgrund dieser Tatsache ergeben sich an der äußeren Strömungsoberfläche des Flügelkastens keine Störungen im Strömungsweg, was die Aufrechterhaltung einer Laminarströmung in diesem Bereich begünstigt.

Dabei haben die Erfinder erkannt, dass durch das Anordnen von Befestigungselementen, die in den Flügelkörper hineinragend vorgesehen sind, und dass an diesen Befestigungselementen angeordnete Verbindungselemente zu einer stabilen Verbindung von Flügelkasten und Flügelvorderkante führen, die den Sicherheitsanforderungen der Luftfahrt genügen. Insbesondere dann, wenn die Befestigungselemente der Flügelschale und/oder Flügelvorderkante integral aus dem Material der Flügelschale und/oder Flügelvorderkante gebildet sind, wird eine hohe Stabilität und Steifigkeit des gesamten Flügelkörpers erreicht. Denn werden beispielsweise Stringer nachträglich auf das Bauteil aufgeklebt, so bilden sich im Verbindungsbereich oftmals Steifigkeitssprünge, die dazu führen, dass Lasten gerade in diesen Bereichen abgetragen werden, was nicht selten zu einer hohen Beanspruchung führt und in dem sogenannten großflächigen Ablösen der Stringer (Stringer-Debonding) führen kann. Durch die integrale Ausgestaltung der Befestigungselemente kann genau dies vermieden werden.

Ein weiterer Vorteil dieser Anordnung ist die Tatsache, dass durch die differentielle Bauweise ein Austausch der Flügelvorderkante problemlos möglich ist, so dass beschädigte Flügelvorderkanten abgelöst und ausgetauscht werden können, ohne dass auf eine die Laminarströmung begünstigende Strömungsoberfläche verzichtet werden muss.

Um die Stabilität des Flügelkörpers weiter zu erhöhen und somit die auf die Flügelschalen wirkenden Luftlasten besser aufnehmen zu können sind die Flügelvorderkante und die Flügelschale in einem Überlappungsbereich zumindest teilweise überlappend angeordnet. Ein bei dieser Überlappung entstehender Oberflächenabsatz in der Strömungsoberfläche kann dann beispielsweise vorteilhafterweise mit Hilfe eines Füllmaterials geglättet werden, um die Aufrechterhaltung der Laminarströmung zu begünstigen. Mit "Glätten" eines Oberflächenabsatzes ist im Sinne der vorliegenden Erfindung gemeint, dass aufgrund einer Überlappung entstehende Stufen und Störungen im Strömungsprofil mit Hilfe eines Füllmaterials so ausgefüllt und ausgeformt werden, dass keine Störungen durch Absätze oder Stufen in dem Strömungsprofil verbleiben, die den Übergang in eine turbulente Grenzschicht der Strömung begünstigen.

Die beiden Flügelkörperelemente - Flügelschale und Flügelvorderkante - werden in dem Überlappungsbereich zusätzlich miteinander verbunden, so dass in diesem Bereich neben den Verbindungselementen eine zusätzliche stabilitätsfördernde Verbindung erzeugt wird. Hierfür weist das Flügelkörperelement, das unter das andere Flügelkörperelement geschoben wird, ein L-Profil auf, das vorzugsweise quer zur Strömungsrichtung an der Abschlusskante des einen Flügelkörperelementes befestigt ist. die Befestigung kann dabei mit Hilfe von Befestigungsmitteln erfolgen, die durch die Oberfläche des Flügelkörperelementes geführt ist. Das andere Flügelkörperelement weist entsprechende L-Profil-Aufnahmen auf, mit denen die L-Profile form- und kraftschlüssig befestigt werden können.

Mit "quer" zur Strömungsrichtung ist nicht zwangsläufig rechtwinklig gemeint. Vielmehr ist anzustreben, dass die L-Profile in Spannweitenrichtung angeordnet sind.

Aufgrund der Tatsache, dass das Flügelkörperelement, welches die L-Profile mit den durch die Oberfläche geführten Befestigungsmitteln aufweist, unter das andere Flügelkörperelement geschoben ist und somit dass durch die Oberfläche geführte Befestigungsmittel sich in dem Überlappungsbereich befindet, weist der gesamte Flügelkörper trotz dieser Befestigungsmittel keine durch die Strömungsoberfläche geführte Befestigungsmittel auf, wie beispielsweise Nieten oder Schrauben, so dass auch hier weiterhin die Aufrechterhaltung einer laminaren Strömung begünstigt wird. Eventuell entstehende Absätze können dann wieder mit Hilfe eines Füllmaterials geglättet werden.

In der klassischen Konstruktion eines Flügelkastens werden die Flügelschalen mit Hilfe von Holmen und Rippen diametral gegenüberliegend miteinander verbunden, um die auf die Flügelschale wirkenden Luftlasten aufzunehmen und die Einhaltung der geforderten Profilkontur des Flügelkörpers zu gewährleisten. Die Rippen werden dabei meist längs in Strömungsrichtung (beispielsweise axial zur Strömungsrichtung) in dem Flügelkasten angeordnet, während Holme quer zur Strömungsrichtung verlaufen. Es ist nunmehr ganz besonders vorteilhaft, wenn die zur Stabilität notwendigen Rippen an den Befestigungselementen der Flügelschalen befestigt sind und des Weiteren so ausgebildet sind, dass sie bis in den Bereich der Flügelvorderkante hineinragen, so dass die Flügelvorderkante über ihre Befestigungselemente ebenfalls an den im Flügelkasten vorgesehenen Rippen befestigt werden kann. In diesem Fall sind die Verbindungselemente gleichzeitig auch die Rippen des Flügelkastens und verbinden so die Flügelvorderkante mit dem Flügelkasten zu einem Strömungsprofil.

Dabei ist es letztendlich unerheblich, ob die Flügelvorderkante im Überlappungsbereich unter die Flügelschale geschoben ist, was zu einer Überlappung führt, bei dem die Flügelvorderkante in den Innenraum des Flügelkörpers zeigt oder ob die Flügelschale unter die Flügelvorderkante geschoben ist, was zu einer Überlappung führt, bei der die Flügelschale in den Innenraum des Flügelkörpers zeigt.

Es hat sich allerdings als vorteilhaft herausgestellt, wenn das erste Flügelkörperelement, welches unter das zweite Flügelkörperelement geschoben wird, die Flügelvorderkante ist, die unter die Flügelschale geschoben wird.

Die Erfindung wird anhand der Figuren beispielhaft näher erläutert. Es zeigen:
- Figur 1: - schematische Darstellung eines Schnittes durch den Flügelkörper;
- Figur 2: - schematische Darstellung eines Ausführungsbeispiels mit zusätzlichen Befestigungsmitteln.

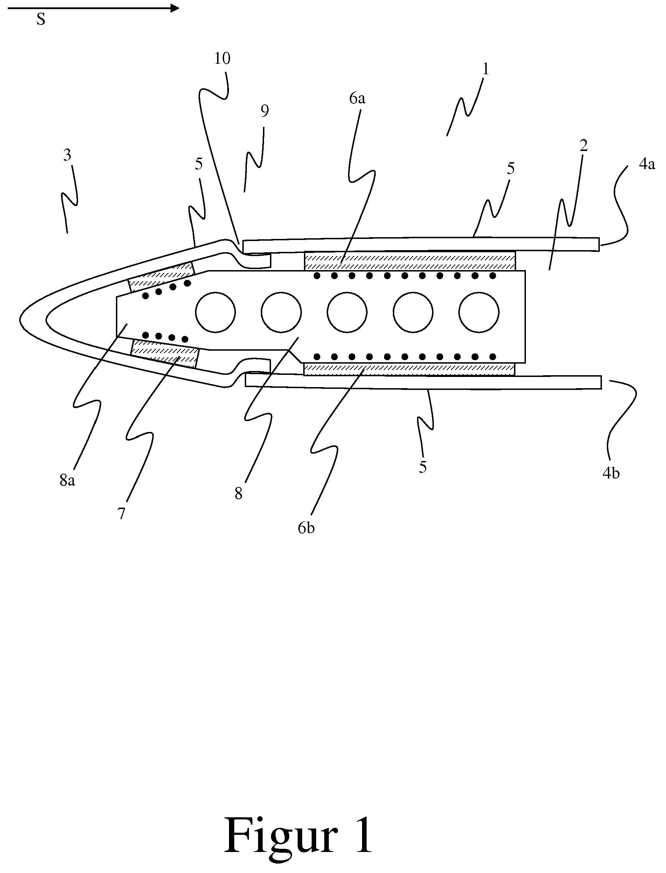

Figur 1 zeigt schematisch den Schnitt durch einen Flügelkörper 1, an dem ein Flügelkasten 2 und eine in Strömungsrichtung S vor dem Flügelkasten 2 angeordnete Flügelvorderkante 3 verbunden sind. Der Flügelkasten 2 weist zwei diametral gegenüberliegende Flügelschalen 4a, 4b auf, die über ein Verbindungselement 8 und nicht dargestellte Holme miteinander verbunden sind. Sowohl die Flügelvorderkante 3 als auch die Flügelschalen 4a, 4b weisen eine äußere Oberfläche 5 auf, die auch als Flügelhaut bezeichnet, die Strömungsoberfläche des Flügelkörpers 1 bildet.

Sowohl die Flügelschalen 4a, 4b des Flügelkastens 2 als auch die Flügelvorderkante 3 weisen nach innen ragende Befestigungselemente 6a, 6b, 7 auf, an denen ein Verbindungselement 8 befestigt werden kann, um so den Flügelkasten 2 mit den Flügelschalen 4a, 4b und die Flügelkante 3 zur Bildung eines gemeinsamen Strömungsprofils zu verbinden.

In der schematischen Darstellung von Figur 1 ist aufgrund der Schnittzeichnung genau ein Verbindungselement 8 gezeigt, das sich längs in Strömungsrichtung S des Flügelkörpers 1 erstreckt. Im Ausführungsbeispiel der Figur 1 kann es sich bei dem Verbindungselement 8 beispielsweise um eine Rippe des Flügelkastens 2 handeln, die im vorderen Bereich 8a in Richtung des Flügelvorderkastens 3 so ausgeformt und ausgebildet ist, dass es an den Verbindungselementen 7 der Flügelvorderkante 3 befestigt werden kann.

Es ist selbstverständlich, dass der vollständige Flügelkörper eine Vielzahl derlei Verbindungselemente 8 (bzw. Rippen) aufweist, um so die notwendige Verbindungsstabilität zu erreichen. Das Verbindungselement ist dabei an einem Befestigungselement 6a der Flügeloberschale 4a sowie an Befestigungselementen 6b der Flügelunterschale 4b befestigt und stabilisiert so zunächst den Flügelkasten 2. Im vorderen Bereich 8a des Verbindungselementes 8 ist das Verbindungselement 8 mit den dortigen Befestigungselementen 7 der Flügelvorderkante 3 befestigt, so dass Flügelkasten 2 und Flügelvorderkante 3 zur Bildung eines gemeinsamen Strömungsprofils miteinander verbunden sind. In einem entstehenden Überlappungsbereich 9, in dem die Flügelvorderkante 2 unter die Flügelschalen 4a, 4b geschoben wurde, ist ein hierdurch entstandener Absatz in der Flügelhaut 5 mittels eines Füllmaterials 10 geglättet.

Die Befestigungselemente 6a, 6b, 7 können beispielsweise L-förmige, in den Innenraum des Flügelkörpers 1 ragende Elemente sein, die integral aus den Faserverbundwerkstoff der Flügelschalen 4a, 4b und/oder der Flügelvorderkante 3 gebildet sein können. Durch eine integrale Ausbildung dieser L-förmigen Verbindungselemente 6a, 6b, 7 wird eine besonders hohe Stabilität dieser Befestigungselemente gewährleistet, so dass die notwendige Stabilität zum Halten der verbundenen Elemente trotz Verwendung eines Faserverbundwerkstoffes erreicht werden kann.

Mittels einer solchen Verbindung wird es nunmehr möglich, einen Flügelkörper herzustellen, dessen äußere Strömungsoberfläche bzw. Flügelhaut 5 die Aufrechterhaltung einer Laminarströmung begünstigt, da keinerlei die Strömung störenden Stufen oder Absätze in der Flügelhaut 5 vorhanden sind. Insbesondere ist der Flügelkörper 1 dadurch gekennzeichnet, dass keinerlei Nieten oder andere durch die äußere Strömungsoberfläche 5 geführten Befestigungsmittel vorhanden sind, so dass ein vollständig glatte Strömungsoberfläche 5 erreicht werden kann. Dabei haben die Erfinder erkannt, dass mit Hilfe eines derartigen Verbindungskonzeptes die auf den Flügelkörper wirkenden Luftlasten mit Hilfe dieser Konstruktion soweit aufgenommen werden können, dass es zu keinen Deformationen in der Strömungsoberfläche 5 kommt, die den Wechsel von einer laminaren Grenzschicht zu einer turbulenten Grenzschicht begünstigt. Vielmehr kann auch bei auftretenden hohen Luftlasten und Beanspruchungen des Flügelkörpers 1 die Laminarströmung aufrecht erhalten werden.

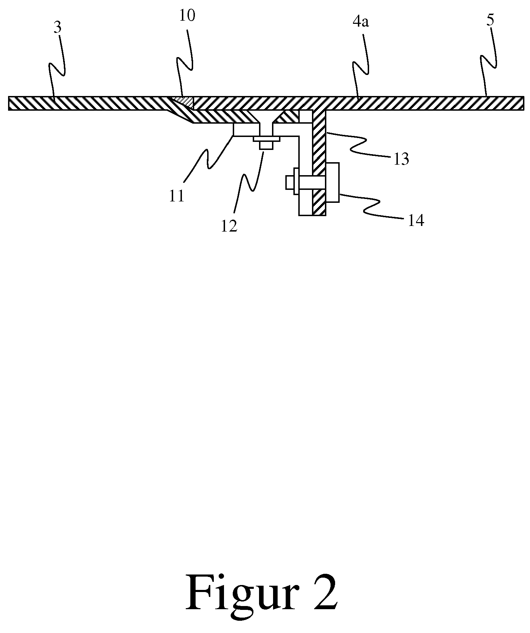

Figur 2 zeigt schematisch ein Ausführungsbeispiel für eine zusätzliche Befestigung im Überlappungsbereich 9 des Flügelkörpers. Das hier dargestellte Beispiel zeigt die Überlappung der Flügelvorderkante 3 mit der Flügeloberschale 4a, wobei die Flügelvorderkante 3 im Überlappungsbereich 9 unter die Flügelvorderkante 4a geschoben ist.

In diesem Bereich ist an der äußeren Kante der Flügelvorderkante 3 ein L-Profil 11 an der Flügelvorderkante 3 angeordnet. Das L-Profil 11 ist dabei mit Hilfe eines durch die Oberfläche der Flügelvorderkante 3 geführten Befestigungsmittel 12 an der Flügelvorderkante 3 vorzugsweise lösbar befestigt. Im Überlappungsbereich 9 ist diese Durchführung des Befestigungsmittels 12 durch die Oberfläche der Flügelvorderkante 3 jedoch unkritisch, da in diesem Bereich die äußere Oberfläche unter die Flügeloberschale 4a geschoben ist und die Flügeloberschale 4a in dem Überlappungsbereich 9 keinerlei Strömungsstörungselemente aufweist.

Die Flügeloberschale 4a weist des Weiteren L-Profil-Aufnahmen 13 auf, die beispielsweise die Vorderkanten-Stringer der Flügeloberschale 4a sein können. Diese Vorderkanten-Stringer verlaufen quer zur Strömungsrichtung und ragen in den Innenraum des Flügelkörpers. Über ein weiteres Befestigungsmittel 14, beispielsweise eine Niete oder eine Schraube, kann nun das an der Flügelvorderkante 3 angeordnete L-Profil an der L-Profil-Aufnahme 13 der Flügeloberschale 4a angeordnet werden und so die Flügelvorderkante 3 fest mit den Flügelkasten 2 verbinden. Ein in der Strömungsoberfläche 5 entstehender Absatz aufgrund der Überlappung im Überlappungsbereich 9 wird mit Hilfe eines Füllmaterials 10 geglättet.

Mittels dieser Befestigung wird es darüber hinaus möglich, die Zwischenbereiche zwischen den einzelnen Rippen (in Spannweitenrichtung) im Überlappungsbereich fest zu verbinden, um die entsprechenden auftretenden Luftlasten ohne Profilumformung aufzunehmen.

Die Rippen 8 im Ausführungsbeispiel der Figur 1 können beispielsweise an speziell vorgesehenen Rip-Caps als Befestigungselemente 6a, 6b angeordnet werden, die längs zur Strömungsrichtung L-förmig oder I-förmig ins Innere des Flügelkörpers 1 ragen. Der verwendete Füllstoff kann beispielsweise ein Polymer sein.

## Patentansprüche

1. Flügelkörper (1) für ein Flugobjekt mit
- einem Flügelkasten (2), der aus zwei gegenüberliegenden Flügelschalen (4a, 4b) gebildet ist, und
- einer in Strömungsrichtung (S) vor dem Flügelkasten (2) angeordneten Flügelvorderkante (3), welche die äußere Strömungsoberfläche (5) der Flügelschalen (4a, 4b) mit der äußeren Strömungsoberfläche (5) der Flügelvorderkante (3) zu einem Strömungsprofil verbindet,
wobei zumindest eine Flügelschale (4a, 4b) ein Material aus einem Faserverbundwerkstoff aufweist und die Flügelschale (4a, 4b) und die Flügelvorderkante (3) jeweils eine Mehrzahl von in den Innenraum des Flügelkörpers (1) ragende Befestigungselemente (6a, 6b, 7) aufweisen, an denen Verbindungselemente (8) befestigt sind, die jeweils an einem Befestigungselement (6a, 6b) der Flügelschale (4a, 4b) und an einem Befestigungselement (7) der Flügelvorderkante (3) derart angeordnet sind, dass die Flügelvorderkante (3) mit dem Flügelkasten (2) zur Bildung des Strömungsprofils verbunden ist, wobei die Flügelschale (4a, 4b) und die Flügelvorderkante (3) in einem Überlappungsbereich (9) zumindest teilweise überlappend angeordnet sind **dadurch gekennzeichnet dass** im Überlappungsbereich (9) an dem unter die Flügelschale (4a) geschobenen Flügelvorderkante (3) ein oder mehrere L-Profile (11) mittels durch die Oberfläche der Flügelvorderkante geführten Befestigungsmitteln (12) befestigt sind, wobei die L-Profile (11) in den Innenraum des Flügelkörpers (1) ragend angeordnet sind, und wobei die Flügelschale (4a) in den Innenraum des Flügelkörpers ragende L-Profil-Aufnahmen (13) hat, an denen die L-Profile (11) der Flügelvorderkante (3) mit Befestigungsmitteln (14) befestigt sind.

2. Flügelkörper (1) nach Anspruch 1, **dadurch gekennzeichnet, dass** die Befestigungselemente (6a, 6b) der Flügelschale (4a, 4b) und/oder der Flügelvorderkante (3) integral aus dem Material der Flügelschale (4a, 4b) und/oder Flügelvorderkante (3) gebildet sind.

3. Flügelkörper (1) nach Anspruch 1 oder 2, **dadurch gekennzeichnet, dass** die Flügelschalen (4a, 4b) des Flügelkastens (2) und die Flügelvorderkante (3) ein Material aus einem Faserverbundwerkstoff aufweisen.

4. Flügelkörper (1) nach einem der vorhergehenden Ansprüche, **dadurch gekennzeichnet, dass** ein im Überlappungsbereich (9) durch die Überlappung der Flügelschale und der Flügelvorderkante entstehender Oberflächenabsatz mit einem Füllmaterial (10) geglättet ist.

5. Flügelkörper (1) nach einem der vorhergehenden Ansprüche, **dadurch gekennzeichnet, dass** die L-Profile und die L-Profil-Aufnahmen quer zur Strömungsrichtung in den Innenraum des Flügelkörpers ragend angeordnet sind.

6. Flügelkörper (1) nach einem der vorhergehenden Ansprüche, **dadurch gekennzeichnet, dass** das erste Flügelkörperelement die Flügelschale und das darunter geschobene zweite Flügelkörperelement die Flügelvorderkante ist.

7. Flügelkörper (1) nach einem der vorhergehenden Ansprüche, **dadurch gekennzeichnet, dass** die Verbindungselemente Flügelkastenrippen (8) sind, die zur Befestigung der Flügelvorderkante in diese hineinragend ausgebildet sind.

8. Flügelkörper (1) nach einem der vorhergehenden Ansprüche, **dadurch gekennzeichnet, dass** zur Verbindung der Flügelschale und der Flügelvorderkante kein Befestigungsmittel durch die Strömungsoberfläche der Flügelvorderkante und Flügelschale geführt ist.

## Claims

1. Wing body (1) for a flying object,
- having a wing box (2), which is formed from two wing shells (4a, 4b) located opposite one another, and
- having a leading wing edge (3), which is arranged upstream of the wing box (2), as seen in the flow direction (S), and connects the outer flow surface (5) of the wing shells (4a, 4b) to the outer flow surface (5) of the leading wing edge (3) to form a flow profile,
wherein at least one wing shell (4a, 4b) has a fibre composite material, and the wing shell (4a, 4b) and the leading wing edge (3) each have a plurality of fastening elements (6a, 6b, 7), which project into the interior of the wing body (1) and on which are fastened connecting elements (8), which are each arranged on a fastening element (6a, 6b) of the wing shell (4a, 4b) and on a fastening element (7) of the leading wing edge (3) such that the leading wing edge (3) is connected to the wing box (2) to form the flow profile, wherein the wing shell (4a, 4b) and the leading wing edge (3) overlap, at least in part, in an overlapping region (9),
**characterized in that**,
in the overlapping region (9), the leading wing edge (3), which is pushed beneath the wing shell (4a), has one or more L profiles (11) fastened on it by way of fastening means (12) guided through the surface of the leading wing edge, wherein the L profiles (11) project into the interior of the wing body (1), and wherein the wing shell (4a) has L-profile mounts (13), which project into the interior of the wing body and on which the L profiles (11) of the leading wing edge (3) are fastened by fastening means (14).

2. Wing body (1) according to Claim 1, **characterized in that** the fastening elements (6a, 6b) of the wing shell (4a, 4b) and/or of the leading wing edge (3) are formed integrally from the material of the wing shell (4a, 4b) and/or leading wing edge (3).

3. Wing body (1) according to Claim 1 or 2, **characterized in that** the wing shells (4a, 4b) of the wing box (2) and the leading wing edge (3) have a fibre composite material.

4. Wing body (1) according to one of the preceding claims, **characterized in that** an offset surface portion produced in the overlapping region (9) by the overlap of the wing shell and the leading wing edge is smoothed over using a filling material (10).

5. Wing body (1) according to one of the preceding claims, **characterized in that** the L profiles and the L-profile mounts project into the interior of the wing body transversely to the flow direction.

6. Wing body (1) according to one of the preceding claims, **characterized in that** the first wing-body element is the wing shell and the second wing-body element, pushed beneath the first, is the leading wing edge.

7. Wing body (1) according to one of the preceding claims, **characterized in that** the connecting elements are wing-box ribs (8), which project into the leading wing edge in order to fasten the same.

8. Wing body (1) according to one of the preceding claims, **characterized in that** there are no fastening means guided through the flow surface of the leading wing edge and wing shell in order to connect the wing shell and the leading wing edge.

## Revendications

1. Corps d'aile (1) pour un objet volant, comprenant
- un caisson d'aile (2) qui est constitué de deux coques d'aile (4a, 4b) opposées, et
- une arête d'aile avant (3) disposée dans la direction de l'écoulement (S) devant le caisson d'aile (2), qui relie la surface d'écoulement extérieure (5) des coques d'aile (4a, 4b) à la surface d'écoulement extérieure (5) de l'arête d'aile avant (3) pour former un profil d'écoulement,
au moins une coque d'aile (4a, 4b) présentant un matériau constitué d'un matériau composite renforcé par des fibres, et la coque d'aile (4a, 4b) et l'arête d'aile avant (3) présentant à chaque fois une pluralité d'éléments de fixation (6a, 6b, 7) faisant saillie dans l'espace interne du corps d'aile (1) au niveau desquels sont fixés des éléments de connexion (8) qui sont disposés à chaque fois au niveau d'un élément de fixation (6a, 6b) de la coque d'aile (4a, 4b) et au niveau d'un élément de fixation (7) de l'arête d'aile avant (3), de telle sorte que l'arête d'aile avant (3) soit connectée au caisson d'aile (2) pour former le profil d'écoulement, la coque d'aile (4a, 4b) et l'arête d'aile avant (3) étant disposées dans une région de chevauchement (9) en se chevauchant au moins en partie,
**caractérisé en ce que**
dans la région de chevauchement (9) au niveau de l'arête d'aile avant (3) poussée sous la coque d'aile (4a), un ou plusieurs profilés en L (11) sont fixés par le biais de moyens de fixation (12) guidés à travers la surface de l'arête d'aile avant, les profilés en L (11) étant disposés de manière à pénétrer dans l'espace interne du corps d'aile (1), et la coque d'aile (4a) présentant des logements de profilés en L (13) faisant saillie dans l'espace interne du corps d'aile, au niveau desquels les profilés en L (11) de l'arête d'aile avant (3) sont fixés avec des moyens de fixation (14).

2. Corps d'aile (1) selon la revendication 1, **caractérisé en ce que** les éléments de fixation (6a, 6b) de la coque d'aile (4a, 4b) et/ou de l'arête d'aile avant (3) sont formés intégralement en le matériau de la coque d'aile (4a, 4b) et/ou de l'arête d'aile avant (3).

3. Corps d'aile (1) selon la revendication 1 ou 2, **caractérisé en ce que** les coques d'aile (4a, 4b) du caisson d'aile (2) et l'arête d'aile avant (3) présentent un matériau constitué d'un matériau composite renforcé par des fibres.

4. Corps d'aile (1) selon l'une quelconque des revendications précédentes, **caractérisé en ce qu'**un épaulement de surface créé dans la région de chevauchement (9) par le chevauchement de la coque d'aile et de l'arête d'aile avant est lissé avec un matériau de remplissage (10).

5. Corps d'aile (1) selon l'une quelconque des revendications précédentes, **caractérisé en ce que** les profilés en L et les logements de profilés en L sont disposés de manière à faire saillie transversalement à la direction d'écoulement dans l'espace interne du corps d'aile.

6. Corps d'aile (1) selon l'une quelconque des revendications précédentes, **caractérisé en ce que** le premier élément de corps d'aile est la coque d'aile et le deuxième élément de corps d'aile poussé en dessous est l'arête d'aile avant.

7. Corps d'aile (1) selon l'une quelconque des revendications précédentes, **caractérisé en ce que** les éléments de connexion sont des nervures de caisson d'aile (8) qui sont réalisées pour la fixation de l'arête d'aile avant de manière à pénétrer dans celle-ci.

8. Corps d'aile (1) selon l'une quelconque des revendications précédentes, **caractérisé en ce que** pour la connexion de la coque d'aile et de l'arête d'aile avant, aucun moyen de fixation n'est guidé à travers la surface d'écoulement de l'arête d'aile avant et de la coque d'aile.
